(19) Europäisches Patentamt
European Patent Office
Office européen des brevets

(11) **EP 4 165 559 B1**

(12) **EUROPEAN PATENT SPECIFICATION**

(45) Date of publication and mention
of the grant of the patent:
**15.04.2026 Bulletin 2026/16**

(21) Application number: **20732577.0**

(22) Date of filing: **11.06.2020**

(51) International Patent Classification (IPC):
*G06N 3/08* (2023.01)    *G06N 3/09* (2023.01)
*G06N 3/098* (2023.01)

(52) Cooperative Patent Classification (CPC):
**G06N 3/08; G06N 3/045; G06N 3/0455; G06N 3/09;**
**G06N 3/098;** G06N 20/20

(86) International application number:
**PCT/EP2020/066235**

(87) International publication number:
**WO 2021/249648 (16.12.2021 Gazette 2021/50)**

(54) **GROUPING NODES IN A SYSTEM**

GRUPPIERUNG VON KNOTEN IN EINEM SYSTEM

REGROUPEMENT DE NOEUDS DANS UN SYSTÈME

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**19.04.2023 Bulletin 2023/16**

(73) Proprietor: **Telefonaktiebolaget LM ERICSSON**
**(PUBL)**
**16483 Stockholm (SE)**

(72) Inventors:
• **MORADI, Farnaz**
**112 18 Stockholm (SE)**
• **VANDIKAS, Konstantinos**
**169 73 Solna (SE)**
• **ICKIN, Selim**
**182 76 Stocksund (SE)**
• **HU, Wenfeng**
**183 71 Täby (SE)**
• **TAGHIA, Jalil**
**113 56 Stockholm (SE)**

(74) Representative: **Ericsson**
**Patent Development**
**Torshamnsgatan 21-23**
**164 80 Stockholm (SE)**

(56) References cited:
**US-A1- 2019 325 350**

• **WAINAKH AIDMAR ET AL: "Enhancing Privacy**
**via Hierarchical Federated Learning", 23 April**
**2020 (2020-04-23), pages 1 - 4, XP055779897,**
**Retrieved from the Internet <URL:https://arxiv.**
**org/pdf/2004.11361.pdf> [retrieved on 20210225]**
• **CHRISTOPHER BRIGGS ET AL: "Federated**
**learning with hierarchical clustering of local**
**updates to improve training on non-IID data",**
**ARXIV.ORG, CORNELL UNIVERSITY LIBRARY,**
**201 OLIN LIBRARY CORNELL UNIVERSITY**
**ITHACA, NY 14853, 24 April 2020 (2020-04-24),**
**XP081659326**
• **SEYYEDALI HOSSEINALIPOUR ET AL: "From**
**Federated Learning to Fog Learning: Towards**
**Large-Scale Distributed Machine Learning in**
**Heterogeneous Wireless Networks",**
**ARXIV.ORG, CORNELL UNIVERSITY LIBRARY,**
**201 OLIN LIBRARY CORNELL UNIVERSITY**
**ITHACA, NY 14853, 7 June 2020 (2020-06-07),**
**XP081692346**

## Description

Technical Field

Embodiments of the present disclosure relate to grouping of nodes in a system, and particularly methods and apparatus for grouping worker nodes in a machine learning system comprising a master node and a plurality of worker nodes.

Background

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

The background section introduces aspects that may facilitate better understanding of the present disclosure. Accordingly, the statements of the background section are to be read in this light and are not to be understood as admissions about what is in the prior art or what is not in the prior art.

Conventionally, machine-learning models may be developed at a centralized network node (which may also be referred to as a master node), using a centralized data set that is available at the centralized network node. For example, a global hub of a network may comprise a global dataset that can be used to develop a global machine-learning model. Typically, a large, centralized dataset is required to train an accurate machine-learning model. Examples of nodes within networks may include base stations (such as 5th Generation radio nodes, gNBs) and core network nodes within wired and/or wireless telecommunication networks (such as 3rd Generation Partnership Project, 3GPP, New Radio, NR, networks).

Training of a machine learning model may alternatively be achieved by employing distributed machine learning techniques. One example of a distributed learning technique is federated learning. By employing a distributed machine learning technique, a machine-learning model may be trained, or a trained model may continue to be trained, in a worker node. This further training of the machine-learning model may be performed using a dataset that is locally available at the worker node, potentially a dataset that has been locally generated at the worker node.

Distributed machine learning techniques allow updated machine-learning models to be generated at worker nodes within a network, where these updated machine-learning models have been trained using data that may not have been communicated to, and may not be known to, the master node (where the machine-learning model may have been initially trained). In other words, an updated machine-learning model may be trained locally at a worker node using a dataset that is accessible locally at the worker node, where the dataset may not be accessible elsewhere within the network (for example, at other worker nodes). It may be that the local set of data comprises sensitive or otherwise private information that is not to be communicated to other nodes within the network.

Communications network operators, service and equipment providers, are often in possession of vast global datasets, arising from managed service network operation and/or product development verification. Such data sets are generally located at a global hub. Federated learning (FL) is a potential technology enabler for owners of such datasets and other interested parties to exploit the data, sharing learning without exposing potentially confidential data.

Document 1, "Communication-efficient learning of deep networks from decentralized data", in Proceedings of the 20th International Conference on Artificial Intelligence and Statistics (AISTATS), 2017 by McMahan, H B et al, available at https://arxiv.org/pdf/1602.05629 as of 28 May 2020, discusses a method for the federated learning of deep networks based on iterative model averaging.

Document 2, "Patient Clustering Improves Efficiency of Federated Machine Learning to predict mortality and hospital stay time using distributed Electronic Medical Records", 2019, by Huang, L and Liu, D, available at https://arxiv.org/ftp/arxiv/papers/1903/1903.09296.pdf as of 28 May 2020, discusses a community-based federated machine learning (CBFL) algorithm evaluated on non-IID ICU EMRs (electronic medical records).

Document 3, "Clustered Federated Learning: Model-Agnostic Distributed Multi-Task Optimization under Privacy Constraints" by Sattler, F et al, , 2019, available at https://arxiv.org/pdf/1910.01991.pdf as of 28 May 2020, discusses Clustered Federated Learning (CFL), a Federated Multi-Task Learning (FMTL) framework, which exploits geometric properties of the FL loss surface, to group the client population into clusters with jointly trainable data distributions.

Conventional federated learning methods, which form an updated machine-learning model based on a simple averaging of a number of worker node versions of a machine-learning model, may not provide an optimal solution for a specific worker node. In particular, averaging versions of a machine learning model may be problematic where data from different worker nodes are highly heterogeneous (which may particularly be the case where the data relates to telecommunications) thereby leading to a model which is of lower quality. In particular, existing methods based on fine-tuning the global model according to the local data may result in a limited degree of personalization for a specific worker node. Furthermore, if the data distribution of a worker changes over time, the global model may become less accurate for the worker node.

Summary

This summary is provided to introduce a selection of concepts in a simplified form that are further described below in the detailed description. This summary is not intended to identify key features or essential features of the claimed subject matter, nor is it intended to be used to limit the scope of the claimed subject matter. For the avoidance of doubt, the scope of the claimed subject matter is defined by the claims.

It is an object of the present disclosure to provide a method, apparatus and computer readable medium which at least partially address one or more of the challenges discussed above. For example, an object of the present disclosure is to provide a machine learning system for increasing the effectiveness of federated learning.

According to an aspect of an embodiment of the invention there is provided a method for grouping worker nodes in a machine learning system comprising a master node and a plurality of worker nodes. The method comprises grouping each worker node of the plurality of worker nodes into a group of a plurality of groups based on characteristics of a data distribution of each of the plurality of worker nodes. The method further comprises subgrouping worker nodes within the group of the plurality of groups into subgroups based on characteristics of a worker neural network model of each worker node from the group of the plurality of groups. The method further comprises averaging the worker neural network models of worker nodes within a subgroup to generate a subgroup average model. The method further comprises distributing the subgroup model. The use of a subgroup of worker neural network models to generate a subgroup average model, wherein the subgrouping takes into account the characteristics of the worker neural network models and data distributions of the worker nodes, may result in an improved selection of worker neural network models being used to generate the subgroup average model and may therefore result in a more accurate average model for distribution (for example, to the worker nodes).

The method may further comprise, after the grouping of the worker nodes, first determining if there is a substantial change in any local dataset of a worker node from among the plurality of worker nodes; wherein if there is no substantial change in any of the local datasets, the method may proceed to the subgrouping; or if there is a substantial change in any of the local datasets, the grouping may be repeated. By evaluating the local datasets for substantial change, the accuracy of the groupings, and hence the accuracy of the average model, may be ensured.

The method may further comprise, after the subgrouping of the worker nodes, second determining if there is a substantial change in any local data sets of the plurality of worker nodes; wherein if there is no substantial change in any of the local datasets, the subgrouping may be repeated; or if there is a substantial change in any of the local datasets, the method may be repeated from the grouping. By evaluating the local datasets for substantial change, the accuracy of the subgroupings, and hence the accuracy of the average model, may be ensured.

The method may further comprise updating the worker neural network model of each worker node of the group and/or subgroup with the subgroup average model. As a result of the method, the subgroup average model may provide improved performance.

The worker nodes of the group may comprise data distributions with similar characteristics. The worker nodes of the subgroup comprise neural network models with similar characteristics.

According to an aspect of an embodiment of the invention there is provided a master node configured to communicate with a plurality of worker nodes in a machine learning system. The master node comprises a grouper module configured to group each worker node of the plurality of worker nodes into a group of a plurality of groups based on characteristics of a data distribution of each of the plurality of worker nodes. The master node further comprises a subgrouper module configured to group worker nodes within the group of the plurality of groups into subgroups based on characteristics of a worker neural network model of each worker node from the group of the plurality of groups. The master node further comprises an averaging module configured to average the neural network models of worker nodes within a subgroup to generate a subgroup average model. The master node further comprises a distribution module configured to distribute the subgroup average model. The master node may provide some or all of the advantages discussed above in the context of the method for grouping worker nodes.

According to an aspect of an embodiment of the invention there is provided a worker node of a plurality of worker nodes configured to communicate with the master node. The worker node comprises a local dataset which trains a worker neural network model to generate a worker neural network model. The worker node further comprises a local trainer module configured to receive the subgroup average model and update the worker neural network model with the subgroup average model. The worker node may provide some or all of the advantages discussed above in the context of the method for grouping worker nodes.

According to an aspect of an embodiment of the invention there is provided a machine learning system comprising a master node and a plurality of worker nodes. The system comprises a grouper module configured to group each worker node of the plurality of worker nodes into a group of a plurality of groups based on characteristics of a data distribution of each of the plurality of worker nodes. The system further comprises a subgrouper module configured to subgroup worker nodes within the group of the plurality of groups into subgroups based on characteristics of a worker neural network model of each worker node from the group among the plurality of groups. The system further comprises an averaging module configured to average the neural network models of worker nodes within a subgroup to generate a subgroup average model. The system further comprises a distribution module configured to distribute the subgroup average model. The system may provide some or all of the advantages discussed above in the context of the method for grouping worker nodes.

According to an aspect of an embodiment of the invention there is provided a master node configured to communicate with a plurality of worker nodes in a machine learning system, the master node comprising processing circuitry and a non-transitory machine-readable medium storing instructions. The master node may be configured to group each worker node of the plurality of worker nodes into a group of a plurality of groups based on characteristics of a data distribution of each of the plurality of worker nodes. The master node may be further configured to subgroup worker nodes within the group of the plurality of groups into subgroups based on characteristics of a worker neural network model of each worker node from the group of the plurality of groups. The master node may be further configured to average the worker neural network models of worker nodes within a subgroup to generate a subgroup average model; and distribute the subgroup average model. The master node may provide some or all of the advantages discussed above in the context of the method for grouping worker nodes.

According to an aspect of an embodiment of the invention there is provided a worker node of a plurality of worker nodes configured to communicate with a master node in a machine learning system, the worker node comprising processing circuitry and a non-transitory machine-readable medium storing instructions. The worker node may be configured to train a worker neural network model to generate a worker neural network model. The worker node may be further configured to receive the subgroup average model and update the worker neural network model with the subgroup average model.

An advantage of an aspect of the invention is that the performance of the models can be improved by grouping data samples (for example, corresponding to data from different cells) which have similar characteristics. The proposed solution may be a unified framework which takes into account statistics from data of a worker as well as a model of a worker in order to dynamically group worker nodes of a federation (system). If the data distribution of a worker node diverges over time, according to an aspect of the invention, the models of the worker nodes are dynamically adapted by re-grouping the data samples. Additionally, a "golden" or representative dataset may be used in the method, in particular if such dataset was collected in advance and is accessible to a master node.

By dynamically (re-)grouping workers in a system, model performance may be improved both at data-level (cell-level) and model-level.

Brief Description of the Drawings

For a better understanding of the present invention, and to show how it may be put into effect, reference will now be made, by way of example only, to the accompanying drawings, in which :

FIG. 1 is a block diagram of a system illustrating master based federated learning;

FIG. 2 is a flow chart of a method according to an example embodiment;

FIG. 3 is a flow chart of a method according to an example embodiment;

FIG. 4 is a block diagram illustrating grouping of worker nodes according to an example embodiment;

FIG. 5A is a block diagram illustrating the configurations of a master node and a plurality of worker nodes according to an example embodiment;

FIG. 5B is a block diagram illustrating the configurations of a master node and a plurality of worker nodes according to an example embodiment and

FIG. 6 is a block diagram illustrating the processes involved in subgrouping worker nodes according to an example embodiment.

Detailed Description

For the purpose of explanation, details are set forth in the following description in order to provide a thorough understanding of the embodiments disclosed. It will be apparent, however, to those skilled in the art that the embodiments may be implemented without these specific details or with an equivalent arrangement.

Examples of the present disclosure provide methods for grouping worker nodes in a machine learning system comprising a master node and a plurality of worker nodes to generate an average model. In particular, the present disclosure relates to a method which may dynamically (re-)group workers of a system to improve model performance at cell-level in a unified framework based on both data distribution and model similarity. The methods introduce the concept of grouping worker nodes based on characteristics of the data distribution of the worker nodes and subgrouping the worker nodes based on characteristics of a worker neural network model of each worker node within a group. In some examples, it may be determined after the grouping of the worker nodes if there is a (substantial) change in the local dataset of a worker node. A substantial change may be a change in the local dataset where a proportion of the data above a threshold value has changed, or a change in a portion of the dataset exceeds a threshold value. The substantial change may be any change in the dataset in some examples, or may be any change which exceeds a predetermined acceptable change value in others. A substantial change may be a user-defined threshold. If no such threshold is provided, then subgrouping may be initiated once there is any change in the local dataset. An advantage of determining if there is a substantial change, rather than any change, is that the method is less costly as the grouping and/or subgrouping does not need to be repeated if there is a minor change in the local datasets. Typically the threshold value for a given system is determined with reference to the available computational and communication resources; lower threshold values result in more frequent regrouping and therefore require higher levels of computational and communication resources than lower threshold values, all else being equal.

In an example, if there is no substantial change in any of the local datasets, the method may proceed to the subgrouping, or if there is a substantial change in any of the local datasets, the grouping may be repeated. In some examples, it may be determined after the subgrouping of the worker nodes if there is a (substantial) change in the local dataset of a worker node. If there is no substantial change in any of the local datasets, the subgrouping may be repeated, or if there is a substantial change in any of the local datasets, the method may be repeated from the grouping. The models of a subgroup may be averaged to generate a subgroup average model, which may then be distributed, for example, to at least one of the worker nodes (and potentially all of the worker nodes in the subgroup, group or system), or to another location. The worker nodes may update their local model with the average model. By performing such a process, changes in a data distribution of a worker node over time may be considered when producing a model for a worker node, and the models are more appropriate for a particular worker node.

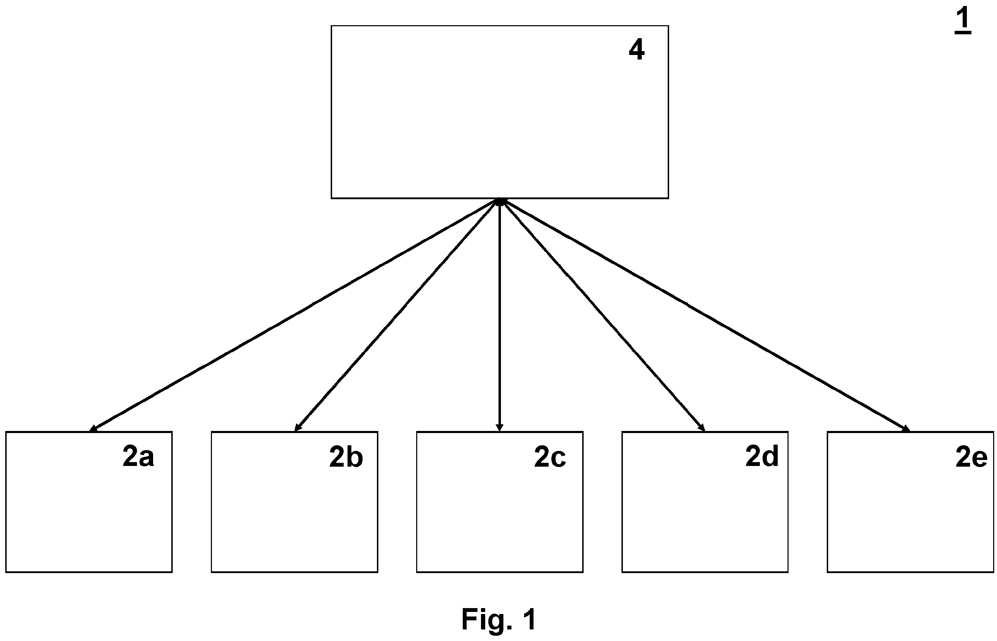

**Fig. 1** illustrates a system in which the methods and processes described herein may be used. In particular, Fig. 1 shows a system 1 in which decentralized machine learning (federated learning) may be performed. This Figure in particular illustrates an example of master-based machine learning, where a master node 4 communicates with a plurality of worker nodes 2a-2e.

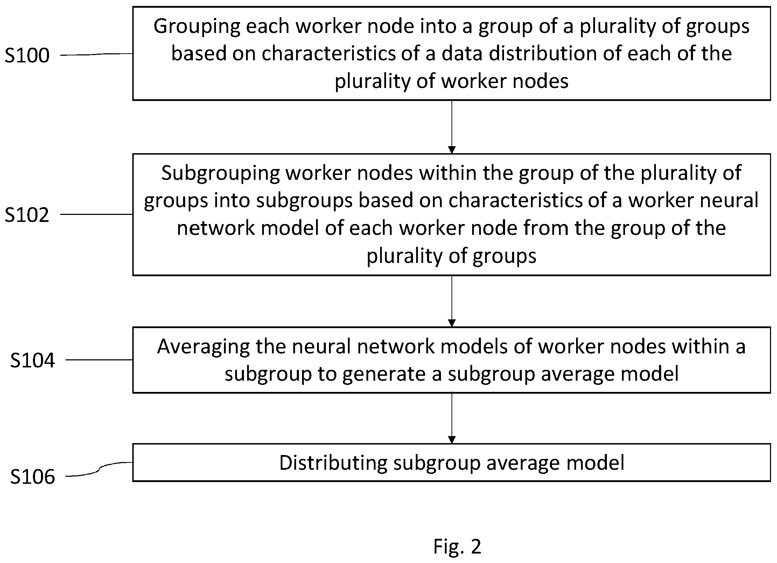

**Fig. 2** is a flow chart showing steps of a method which may be performed by a system such as that shown in Fig. 1. In particular, the steps of the method include grouping each worker node into one of a plurality of groups based on characteristics of a data distribution of each of the plurality of worker nodes (S100), subgrouping worker nodes within a group of the plurality of groups into subgroups based on characteristics of a worker neural network model of each worker node from the group of the plurality of groups (S102) and averaging the neural network models of worker nodes within a subgroup to generate a subgroup average model (S104), and distributing the subgroup average model (S106). The same worker node may be grouped into more than one group and/or subgroup.

To ensure good task performance of a global model used by the worker nodes, federated learning relies on an iterative process broken up into a set of worker-master interactions known as a federated learning round. Each round of this process may consist of transmitting the current average model to the relevant worker nodes, training local models of the worker nodes to produce a set of potential model updates at each node, and then (re-)performing the methods described herein. The methods may therefore be performed per round.

The method may initially involve a neural network being adopted by all worker entities (nodes) of a system (e.g. federated worker nodes of a system). The master node may distribute the initial neural network. The same neural network (a generic neural network model, for example) may be adopted by all the worker nodes of the system, although different neural networks may also be used by worker nodes within the system. Each worker node trains a neural network model using their own local data and a neural network (which may be the same neural network at each worker node) to generate a respective worker neural network model (or worker model). As a result of the grouping and/or subgrouping, one or more of the worker models may be updated using the average model which is an average of models within the same group or subgroup of the worker node, as determined by the aforementioned method.

A neural network comprises a plurality of layers, wherein a layer is a collection of 'nodes' of a neural network operating together at a specific depth within the neural network. Each neural network of the worker nodes may comprise an identical architecture (wherein all the layers of a worker node are the same as the equivalent layers in another worker node), or one or more individual layers of the neural networks of the worker nodes may share an identical architecture (with one or more other layers being non-identical). For example, assume there are two workers, A and B. Worker A has a neural network with $L_A$ layers and worker B has a neural network with $L_B$ layers. Among the layers of the workers' neural networks, there are L consecutive layers ($L<L_A$ and $L<L_B$) that have identical architectures. In this case, worker A and worker B can federate with each other using the L layers that they have in common. Thus, a set of worker neural network models may be selected for the layers that the workers have in common. For example, the method may be performed for particular layers of the generic neural network.

The data distribution of a worker node may be based on the local data of a worker node. The local data of a worker node may be at least one of: Quality of Service (QoS) data such as QoS performance counter dataset collected on the network elements (such as the worker nodes) used in key performance indicators related to activity, throughput, latency, mobility, coverage level, etc, a dataset containing the event logs of a worker node (e.g., system or equipment errors, faults, alarms, and events), a configuration of the worker node, etc, data logs of resource usage such as CPU, memory, etc. The local data may be time series data generated from network performance measurements or counters in case of telecom domain, sensor data from IoT devices such as temperature, vibration, etc. or data from computer/cloud deployments such as CPU usage, memory usage, etc.

The average model (subgroup average model or group average model) may be used for estimating or predicting KPI degradation related to QoS such as call quality, network throughput or latency; predicting hardware or software failures in advance; predicting site failures, estimating anomalies in the network elements, etc., sleeping cell detection and SLA violation prediction.

The method may also include steps of, after the grouping of the worker nodes, first determining if there is a substantial change in any local dataset of a worker node from among the plurality of worker nodes; wherein if there is no substantial change in any of the local datasets, the method proceeds to the subgrouping, or if there is a substantial change in any of the local datasets, the grouping is repeated. The method may also include the steps of, after the subgrouping of the worker nodes, second determining if there is a substantial change in any local data sets of the plurality of worker nodes; wherein if there is no substantial change in any of the local datasets, an averaging of models may be performed and then the subgrouping is repeated; or if there is a substantial change in any of the local datasets, the method is repeated from the grouping. Thus, if the local data of a worker node has changed (over a period of time), regrouping is performed so that the resulting average model is the most appropriate for the present local data of the relevant worker node.

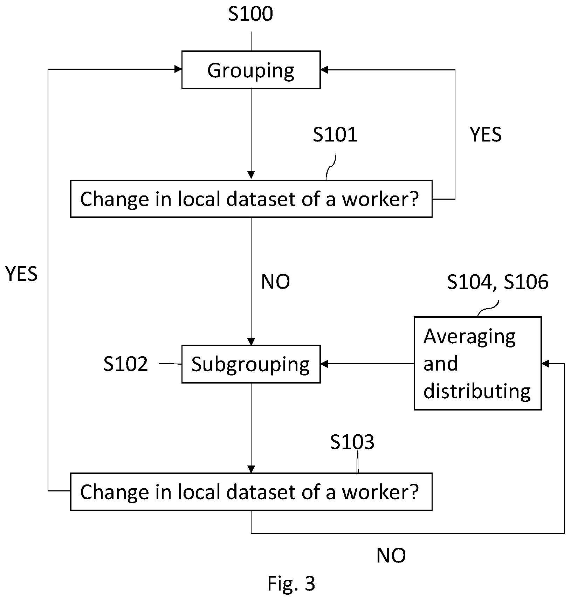

For example, the grouping may be an iterative process as is shown in the flow chart illustrated in **Fig. 3.** The grouping S100 as defined in relation to Fig. 2 may be performed. Thus, the worker nodes may be grouped into at least one group based on characteristics of the data distribution of a data sample of a worker. The method then moves to step S101, in which it is determined if there has been a (substantial) change in the local dataset of any worker of the plurality of workers. If the change is significant (e.g. above a predetermined threshold value), (YES) the method moves to the step of grouping S100, and the grouping is re-performed. If the change is insignificant (e.g. below a predetermined threshold value), or there is no change, the method moves to step S102 in which subgrouping of worker nodes within the group is performed, where worker nodes are grouped into subgroups based on characteristics of the worker neural network models. Once the subgrouping has been performed, it is determined if there has been a change in the local dataset S103. If there has been no change in the dataset of any of the worker nodes, then the models within the subgroup can be averaged to generate a subgroup average model S104, which can then be distributed (for example, to one or more of the worker nodes in the relevant subgroup or to another location) S106. The subgrouping may then be repeated. For example, the subgrouping may be repeated after a predetermined amount of time or after the local data of the worker nodes has been applied to their received subgroup average model.

The averaging to generate the subgroup average model may be done per layer of the neural network of the target worker node following the federation of common layers of neural networks of worker nodes; this option may be referred to as layer-wise federation or layer-wise federated learning. The averaging may be weighted averaging, where the weighting of each model is determined, for example, based on the similarity of models and/or the similarity of the characteristics of the data distribution of the worker nodes.

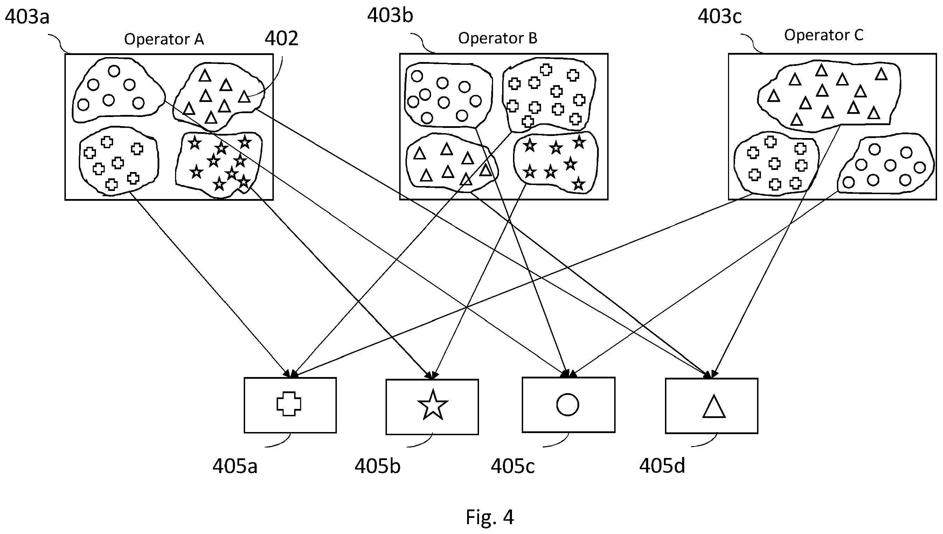

Fig. 4 illustrates an example of grouping worker nodes. In this example, operator A 403a comprises a plurality of worker nodes 402 (where each worker node may represent a cell), each worker node represented by a circle, triangle, cross or star shape. Operator B 403b also comprises worker nodes represented by circles, triangles, crosses and stars, and operator C 403c comprises worker nodes represented by triangles, crosses and circles. The worker nodes represented by like shapes comprise similar data distributions. For example, all the triangle shape worker nodes comprise similar data distributions to one another, all the circle shape worker nodes comprise similar data distributions to one another, all the cross shape worker nodes comprise similar data distributions to one another and all the star shape worker nodes comprise similar data distributions to one another. The worker nodes with similar data distributions at each operator may be grouped. For example, as is shown in Fig. 4, all the triangle shape worker node data of operator A, operator B and operator C are grouped into the triangle group 405d. The cross shaped worker nodes data of operator A, operator B and operator C are grouped into the cross group 405a, the circle shaped worker nodes data of operator A, operator B and operator C are grouped into the circle group 405c, and the star shaped worker nodes data of operator A and operator B are grouped into the star group 405b. Thus, each worker node is grouped into a group based on characteristics of a data distribution.

As an example, a plurality of operators may comprise a plurality of worker nodes, where the data samples within each worker may correspond to a cell. Thus, instead of training a single neural network model using data from all cells at the operators, this example enables training of four different neural network models each trained with data samples from similar cells at different operators. The grouping of cells may change over time as the data distribution at different cells may change, e.g., due to a sports event the network traffic at cells close to the event's location may increase. Therefore, the method proposed above for grouping worker nodes may be dynamically performed to re-group cells over time.

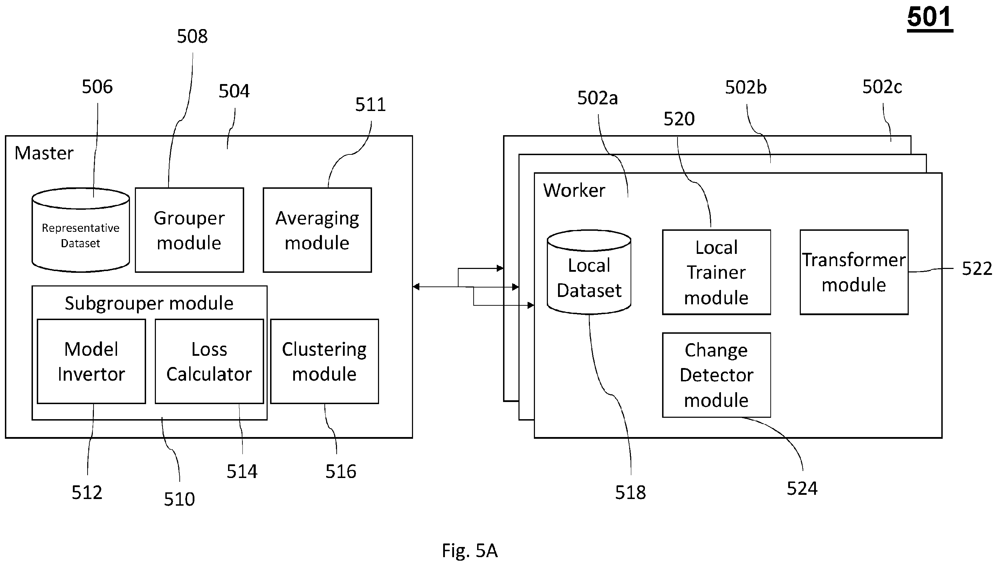

Fig. 5A is a block diagram illustrating an example of a master node 504 and a plurality of worker nodes 502a, 502b, 502c in a system 501. Each of the worker nodes 502a, 502b, 502c are able to communicate with the master node 504.

The master node 504 comprises a representative, or "golden", dataset 506. The representative dataset may be an idealized dataset used as a comparison for data from worker nodes. The representative dataset is representative of different types of worker node data; it is similar to data from worker nodes but is more diverse. For example, in the telecom domain where the worker nodes may be base stations, where the data from different operators are used for different workers, the golden dataset can be a dataset created from data of multiple other operators (typically created using data from operators/nodes not participating in the federated learning system). The representative dataset is typically larger than the dataset of each worker node. Thus, master node may have, or may have access to, a representative centralized dataset (e.g. the representative dataset) which is not available to the workers. This dataset may be used for grouping data at cell (sample) level, in the grouping as described above.

The master node 504 also comprises a grouper module 508 configured to group each worker node of the plurality of worker nodes into one of a plurality of groups based on characteristics of a data distribution of each of the plurality of worker nodes, a subgrouper module 510 configured to subgroup worker nodes within a group of the plurality of groups into subgroups based on characteristics of a worker neural network model of each worker node from the group among the plurality of groups, and an averaging module 511 configured to average the neural network models of worker nodes within a subgroup to generate a subgroup average model. The averaging module may be used to run an averaging method on the model weights received from the worker nodes.

The subgrouper module 510 may comprise a model inverter 512 configured to compute the inverse of a neural network to generate a backward neural network, obtain a set of responses using the representative dataset 506, feed the set of responses into the backward neural network to generate a set of representations, and feed the set of representations into the neural network to generate a set of predicted responses. The subgrouper module 510 may also comprise a loss calculator 514 configured to determine a loss value between the set of responses and the set of predicted responses.

The master node may comprise a clustering module 516 configured to perform subgrouping of the worker nodes based on data received from the worker nodes using a clustering algorithm. In particular, the clustering module may generate cluster representations which may be sent to each worker node 502a, 502b, 502c, and may receive indications from the worker nodes as to which subgrouping the worker nodes belong which has been based on the cluster representations and the local data of each worker node 502a, 502b, 502c. The clustering module 516 may also be used to perform grouping of the worker nodes.

Each worker node 502a, 502b, 502c is configured to communicate with the master node 504. Each worker node 502a, 502b, 502c comprises a local dataset 518 which trains a neural network model at the worker node to generate a worker neural network model (worker model), a local trainer module 520 configured to update the worker neural network model with the subgroup average model, a transformer module 522 configured to receive an encoder model E from the master node and apply the encoder model to the local dataset to generate an encoded representation of the local data, to group the representations based on cluster representations received from the master node, and send the result of the grouping to the master node, and a change detector module 524 configured to determine when a local dataset has changed.

The grouper module 508 may be used to group the data samples of worker nodes with similar data distributions to determine which workers belong to a group. The grouper module may provide a first level of grouping. The grouper module may first train an autoencoder model AE comprising an encoder part (referred to as the encoder model E) on the representative dataset to minimize the potential reconstruction error on the dataset. The encoder part of the model may be used for encoding the data samples in the representative dataset to generate encoded data. The grouper module 508 may then run a clustering algorithm provided by the clustering module on the encoded data and identify representatives for each cluster (cluster representatives may also be known as the cluster centroids, for example, a centroid is a vector that contains one number for each variable, where each number is the mean of a variable for the observations in that cluster, where the cluster centroid may be considered to be multi-dimensional average of the cluster). The encoder model E and the encrypted cluster representatives may then be sent back to the worker nodes (note that worker nodes in this example may not have access to a decoder part D of the autoencoder model and may only have access to the encoder part E of the autoencoder model. Thus, in this case there would be no risk of compromising privacy of the representative dataset). The grouper module may be reactivated once the change detector module has identified that the local dataset module has been updated, for example, when local data of a worker node has changed (i.e., when a change detector flag is True, or YES in step S101 or S103 as shown in Fig. 3).

The subgrouper model may be applied to the groups created by the grouper module. The subgrouper module 510 may be responsible for automatically subgrouping the models from the workers belonging to the same group.

The model invertor 512 of the subgrouper module 510 may compute the inverse of the incoming workers' neural networks (Local Trainer) and produce a set of representations given the labels in the representative dataset.

In one example embodiment, the model inverter 512 takes as input the parameters of the worker neural network of the local trainer module of a worker node. The model inverter 312 performs the process below for each worker node within a group. The neural network model of a worker node is referred to as the forward network. Given the forward network, the backward network is computed as follows.

Let the i-th layer of the forward network be

$$h_i = f(W_i h_{i-1} + b_i) \qquad\qquad (Eq.1)$$

in which representations $h_i$ are computed from the representations $h_{i-1}$ from a previous layer, the weight matrix $W_i$ and bias vector $b_i$ transformed via the activation function $f$. The i-th layer of the backward network is constructed as:

$$z_i = W_i^{\dagger}(f^{-1}(h_i) - b_i) \qquad\qquad (Eq.2)$$

where † indicates the Moore-Penrose inverse operator. In this equation $z_i$ is referred to as the latent representation at the i-th layer of the backward network. Unlike the forward network which is required to be fully differentiable for the purpose of backpropagation, the backward network does not require to be differentiable as backpropagation does not occur through the backward network. Since there is no differentiability requirement for the backward network, in the cases where the chosen activation function $f$ is not invertible, numerical methods can be used to approximate computation of $f^{-1}$ (such as Newton method or polynomial approximations).

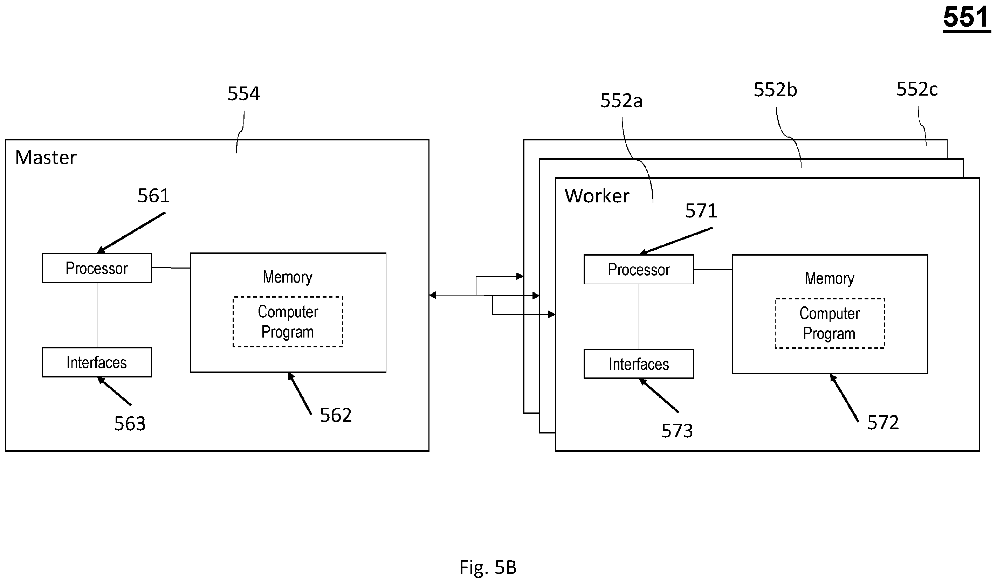

Fig 5B is a block diagram illustrating an example of a master node 554 and a plurality of worker nodes 552a, 552b, 552c in a system 551. Each of the worker nodes 552a, 552b, 552c are able to communicate with the master node 554. Master node 554 comprises a processor 561 and a memory 562 storing a computer program. Master node 554 may further comprise interfaces 563, such as transmission or reception devices. Each worker node 552a, 552b, 552c comprises a processor 571 and a memory 572 storing a computer program. Each worker node 552a, 552b, 552c may further comprise interfaces 573, such as transmission or reception devices. The master node 554 and worker nodes 552a, 552b, 552c are operable to perform the methods discussed above with reference to the master node 504 and plurality of worker nodes 502a, 502b, 502c in system 501, or any other method discussed herein.

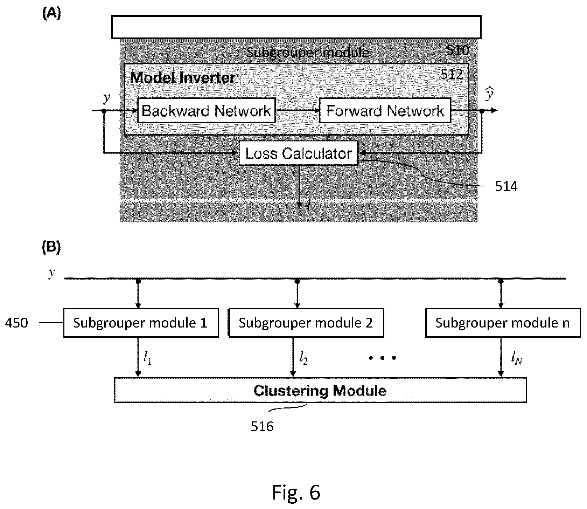

Fig. 6 illustrates the processes which may be performed in the subgrouper module 510 per worker node (shown in 6A) and a generalized view where the outputs of the processes performed for each worker node in the subgrouper are input into a clustering module 516 (shown in 6B). In particular, the subgrouper module receives the worker neural network model of each worker node within a group (a forward network of each worker node). The model invertor 512 then computes the backward network for each forward network. The set of responses y which are the set of responses which may be generated by feeding the representative dataset 506 into the neural network are fed into the backward network of the model inverter. The backward network produces representations z . The generated representations (latent representations) z are fed to the forward network. The forward network generates the predicted responses $\hat{y}$. Both the responses y (true responses) and predicted responses $\hat{y}$ are sent to the loss calculator of the model grouper module for the purpose of grouping. The loss calculator uses the same loss criterion embedded into the forward network in order to compute the loss $l$ between the responses and the predicted responses. For example, if the forward network is a classifier based on cross-entropy, the criterion used by the Loss Calculator would be cross-entropy. The loss calculated by the subgrouper module 510 for each worker node $l_1, l_2, ... l_n$ is fed into the clustering module, where the clustering module clusters similar models based on the losses. For example, the loss may comprise a set of data which indicates the loss when the representative dataset is processed using the model inverter. The representative dataset comprises a set of data relating to different types of worker node. Thus, the loss comprises a set of data which indicates the loss value per type of worker node. Where the loss value is high, the model of the worker node is not appropriate for the particular type of worker node associated with the particular loss value. When the loss value is low, the model of the worker node is appropriate for the particular type of worker node associated with the particular loss value.

The loss calculator 514 may produce a score per worker node based on the latent representations produced by the model invertor and the corresponding local trainer for each of the worker nodes. The score is computed using the criterion embedded in the local trainer module. Given the scores computed by the loss calculator, the clustering module may automatically cluster the scores into a number of groups, thereby clustering the worker nodes into a number of groups.

Thus, the clustering module may automatically cluster incoming data into a number of groups. The clustering module may be used by both the grouper module and the subgrouper module. An example of a clustering algorithm which may be used by the clustering module is a VB-GMM (Variational Bayesian Gaussian Mixture Model). This model is particularly advantageous as it is able to learn optimal number of clusters automatically in a data-driven approach. However, other clustering methods or algorithms may be used. For example methods of clustering such as k-means, mean-shift, or DBSCAN, spectral clustering, or any other probabilistic mixture models such as student t mixture could be used.

For example, in K-means clustering the model is applied on the input features of the (encoded) representative dataset and groups the input samples into k clusters where each data sample belongs to the cluster with the nearest mean. First, k centroids are initialized (k random data samples). Then the sum of the squared distance between all data samples and centroids are calculated. Each data sample is then assigned to the closest centroid. For each cluster, the average of all data samples are calculated to find a new centroid for the cluster. The algorithm runs iteratively until there is no change in the cluster centroids. In this way all the data samples which are similar (i.e., have similar data distribution) are grouped together in a cluster.

Parameters of models of worker nodes belonging to the same group are sent to the averaging module of the master node for averaging.

Worker nodes may use their private local dataset to train a local copy of the model (the worker neural network model) during federated learning. The local dataset may be dynamically updated when new data arrives, e.g., in the telecommunications domain where the worker nodes may be base stations, the local dataset may be updated after receiving new performance measure (PM) counters at each time interval. PM counters are collected at radio cells every given number of minutes; examples include number of connected users to a cell, number of handovers, downlink throughput, uplink throughput, and so on.

The local trainer module may be a neural network of arbitrary design. All worker nodes in the federation (system) may adopt the same neural network architecture as described above. The local trainer module, at each round, may receive the average model produced by the averaging module from the master node. An average model may be generated after the grouping or after the subgrouping. Upon receiving the average model, the local trainer module may update its model so that the average model effectively replaces the current worker neural network model. The local trainer module may then continue training its model using local data and sends the updated model (or the neural network parameters of the model) back to the master node.

The transformer module may use the encoder sent by the master node and apply it to its local data. The transformer module may then generate an encoded representation of the local data of the worker node. The encoded representations may then be grouped into a number of clusters given the cluster centroids sent by the master node. The cells from different operators that end up in the same cluster may federate with each other. The transformer module may send the result of the grouping to the Master. The transformer module may only be activated if a change detector flag is True (e.g. YES in step S101 or S103 as shown in Fig. 3).

The change detector module may be responsible for identifying when the local dataset, which is dynamically updated, has changed (e.g., when the data distribution of the local dataset has changed). The output of the change detector module may be either 'True' or 'False'. If the output is True, there has been a change in the local dataset and if the output is 'False', there has not been a change in the local dataset. If change detector flag is True, the grouper module may be reactivated and the method may restart. If the change detector flag is False, the subgrouper module and the transformer module may be reactivated.

The method performed using these modules is explained in more detail below according to an example embodiment.

**Initialization** Step: In an initialization step, the change detector flag may be set to True. All workers may share the same Local Trainer architecture as their model and may be initialized similarly. For example, the parts of the models of the worker nodes that federate may comprise the same architecture.

**Phase 1. Grouping:** The master may initiate the grouping module. More specifically, the following steps may be carried out which results in the grouping of the workers at the master node.

a) The grouper module at the master node trains an autoencoder (AE) model using the representative dataset.

b) The grouper module encodes the representative dataset using the encoder part of the AE (E).

c) The grouper module clusters the encoded data automatically into a number of clusters using the clustering module.

d) The master node sends the encoder model (E) and an encrypted version of the cluster centroids to the workers.

e) The transformer module at each worker node encodes the respective local dataset using E to generate encoded local data and clusters the encoded local data using the cluster centroids. The Transformer module informs the master of the result of the clustering.

f) The master node initiates group-level federated learning by sending the worker nodes' models belonging to the same group to the averaging module.

g) The averaging module takes the average of the incoming models. The resulting average models (one model per group) are sent back to the workers, and their corresponding local trainer models are updated with the average models.

h) The change detector module then examines whether there has been a change in the local dataset of a worker node:

    i. If there is no change in local dataset, the method proceeds to Phase 2, subgrouping. The change detector module flag is set to False; and

    ii. If there is a change in local dataset, Phase 1, grouping, is repeated. The change detector module flag remains True.

**Phase 2. Subgrouping:** The master node initiates the model grouping module. More specifically, the following steps are carried out per group which results in further subgrouping of the workers belonging to the same group based on their weights.

a) The model invertor module is applied to each group. The model invertor takes as input the current local trainer neural network model, referred to as the forward network, and compute its inverse, referred to as the backward network. The computation of the backward neural network is described above.

b) Given the forward and backward networks, the loss calculator module produces a score for each worker in the cell group. The loss calculator takes as inputs both the forward network and the backward network.

c) The forward network may take as inputs the representative dataset and produce responses (response vectors) (responses are, for example, labels in the case of a classification problem or output responses of the representative dataset in the case of regression), or the representative dataset may already include responses (alternatively, if the representative dataset does not include responses (or labels) and only includes input features, the responses can be constructed in real time). If the representative dataset does not include responses and it only contains the input features, the following steps may be performed to construct the responses:

    i. average all neural networks of the workers, and create an average model;

    ii. feed the input features of the representative dataset into the average model. This step produces a set of responses.

After completion of steps i and ii, the constructed responses can be fed into the backward network.

d) The backward network takes as inputs the responses (response vectors) and produces a set of (unique) representations (or latent representations). For example, for a given held out set of labels from the representative dataset (a test set of data), it first generates a set of latent representations using the backward network. These representations are passed as the input to the forward network. The output of the forward network is the predicted responses (for example predicated labels in the case of classification). The loss calculator module uses the same criterion embedded in the local trainer neural network (for example cross-entropy in the case of classification or root-mean-squared in the case of regression) and computes the loss between the true and predicated responses.

e) Given the scores computed by the loss calculator, the clustering module automatically clusters the scores into a number of groups.

f) The subgrouper module informs the master node about the result of grouping. The master node then initiates federated learning by sending the workers' models belonging to the same subgroup to the averaging module.

g) The averaging module takes the average of the incoming models. The resulting average models (one model per subgroup) are sent back to the workers belonging to the same subgroup, and their corresponding local trainer models are updated with the average models.

h) The change detector module examines whether there has been a change in the local dataset of a worker node:

i. If there is no change in local dataset, it repeats the Phase 2, subgrouping. The change detector module flag remains False.

ii. If there is a change in local dataset, it proceeds to the Phase 1, grouping. The change detector module flag is set to True.

The examples herein are not limited to sample-based clustering and model-based grouping presented above. Alternative example methods are explained below.

For example, in Phase 1, if the master node does not have access to a representative dataset, a distributed clustering algorithm can be used. Alternatively a public data set which all workers have access to may be used. One further example is the method presented in Document 2. In this method, each worker node may train the autoencoder model on its local dataset and send back only the encoder part of the model to the master node. The master node then creates an aggregated encoder (e.g., by calculating the weighted average of the worker encoder models) and sends the aggregated encoder back to the worker nodes. The worker nodes then use the aggregated encoder to encode their data and send back aggregated encoded feature values to the master node. The master node uses the encoded features to train a clustering model (e.g., k-means) which is sent to the workers to cluster their data samples locally.

In Phase 2, the subgrouper module can use the model weights to re-group the worker nodes dynamically during training. In this approach, the master node initiates the federated learning among different clusters by sending an initial model with random or pre-trained weights. For each subgroup, at each round when the master receives the weights from the workers, the weights can be used as input features to a clustering algorithm. The clustering can also be performed by calculating the similarity between model weights e.g., using cosine similarity as proposed in Document 3. Other similarity metrics and clustering algorithms may also be used for model-based grouping (subgrouping) during federation.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one of skill in the art, the function of the program modules may be combined or distributed as desired in various embodiments. In addition, the function may be embodied in whole or in part in firmware or hardware equivalents such as integrated circuits, field programmable gate arrays (FPGA), and the like.

References in the present disclosure to "one embodiment", "an embodiment" and so on, indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

It should be understood that, although the terms "first", "second" and so on may be used herein to describe various elements, these elements should not be limited by these terms. These terms are only used to distinguish one element from another. For example, a first element could be termed a second element, and similarly, a second element could be termed a first element, without departing from the scope of the disclosure. As used herein, the term "and/or" includes any and all combinations of one or more of the associated listed terms.

The terminology used herein is for the purpose of describing particular embodiments only and is not intended to limit the present disclosure. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components, but do not preclude the presence or addition of one or more other features, elements, components and/ or combinations thereof. The terms "connect", "connects", "connecting" and/or "connected" used herein cover the direct and/or indirect connection between two elements.

The present disclosure includes any novel feature or combination of features disclosed herein either explicitly or any generalization thereof. Various modifications and adaptations to the foregoing exemplary embodiments of this disclosure may become apparent to those skilled in the relevant arts in view of the foregoing description, when read in conjunction with the accompanying drawings. However, any and all modifications will still fall within the scope of the non-limiting and exemplary embodiments of this disclosure. For the avoidance of doubt, the scope of the disclosure is defined by the claims.

## Claims

1. A method for grouping worker nodes in a machine learning system for federated learning, the machine learning system comprising a master node and a plurality of worker nodes, the method comprising:

   grouping each worker node of the plurality of worker nodes into a group of a plurality of groups based on characteristics of a data distribution of each of the plurality of worker nodes wherein the worker nodes of the group comprise data distributions with similar characteristics;
   subgrouping worker nodes within the group of the plurality of groups into subgroups based on characteristics of a worker neural network model of each worker node from the group of the plurality of groups wherein the worker nodes of the subgroup comprise neural network models with similar characteristics;
   averaging, per layer, the worker neural network models of worker nodes within a subgroup to generate a subgroup average model; and
   distributing the subgroup average model to one or more of the worker nodes in a relevant subgroup or to another location.

2. The method as claimed in claim 1 further comprising, after the grouping of the worker nodes, first determining if there is a substantial change in any local dataset of a worker node from among the plurality of worker nodes; wherein

   if there is no substantial change in any of the local datasets, the method proceeds to the subgrouping; or
   if there is a substantial change in any of the local datasets, the grouping is repeated.

3. The method as claimed in any preceding claim further comprising, after the subgrouping of the worker nodes, second determining if there is a substantial change in any local data sets of the plurality of worker nodes; wherein

   if there is no substantial change in any of the local datasets, the subgrouping is repeated; or
   if there is a substantial change in any of the local datasets, the method is repeated from the grouping.

4. The method as claimed in any preceding claim, the method further comprising updating the worker neural network model of each worker node of the subgroup with the subgroup average model.

5. The method as claimed in any preceding claim, the method further comprising, after the grouping, averaging the worker neural network model of each worker node of a group of the plurality of groups to generate a group average model.

6. The method as claimed in claim 5, further comprising updating the worker neural network model of each worker node of the group with the corresponding group average model.

7. The method as claimed in any preceding claim, wherein the grouping and/or the subgrouping is performed using a clustering algorithm.

8. The method as claimed in any preceding claim, wherein a representative data set is used to perform the grouping.

9. The method as claimed in claim 8, wherein, in the grouping, an encoder model is trained using the representative data set, and the representative dataset is encoded using the encoder model to generate encoded data.

10. The method as claimed in claim 9, wherein, in the grouping, a clustering algorithm is run on the encoded data to determine clusters, and a cluster representative for each cluster is identified, wherein each cluster representative corresponds to a group of the plurality of groups.

11. The method as claimed in claim 10, wherein, in the grouping, the method further comprises determining to which group a worker node belongs by encoding the local data set of a worker node using the encoder model and using the cluster representative for each cluster.

12. The method as claimed in any preceding claim, wherein the subgrouping further comprises:

computing the inverse of a neural network of each of the worker nodes to generate a backward neural network;
obtaining a set of responses using the representative dataset;
feeding the set of responses into the backward neural network to generate a set of representations;
feeding the set of representations into the neural network to generate a set of predicted responses;
determining a loss value between the set of responses and the set of predicted responses; and
running a clustering algorithm on the loss values to group the worker nodes into subgroups.

13. A master node configured to communicate with a plurality of worker nodes in a machine learning system for federated learning, the master node comprising:

a grouper module configured to group each worker node of the plurality of worker nodes into a group of a plurality of groups based on characteristics of a data distribution of each of the plurality of worker nodes wherein the worker nodes of the group comprise data distributions with similar characteristics;
a subgrouper module configured to group worker nodes within the group of the plurality of groups into subgroups based on characteristics of a worker neural network model of each worker node from the group of the plurality of groups wherein the worker nodes of the subgroup comprise neural network models with similar characteristics;
an averaging module configured to average, per layer, the neural network models of worker nodes within a subgroup to generate a subgroup average model; and
a distribution module configured to distribute the subgroup average model to one or more of the worker nodes in a relevant subgroup or to another location.

14. A machine learning system, for federated learning, comprising a master node and a plurality of worker nodes, the system comprising:

a grouper module configured to group each worker node of the plurality of worker nodes into a group of a plurality of groups based on characteristics of a data distribution of each of the plurality of worker nodes wherein the worker nodes of the group comprise data distributions with similar characteristics;
a subgrouper module configured to subgroup worker nodes within the group of the plurality of groups into subgroups based on characteristics of a worker neural network model of each worker node from the group among the plurality of groups wherein the worker nodes of the subgroup comprise neural network models with similar characteristics;
an averaging module configured to average, per layer, the neural network models of worker nodes within a subgroup to generate a subgroup average model; and
a distribution module configured to distribute the subgroup average model to one or more of the worker nodes in a relevant subgroup or to another location.

**Patentansprüche**

1. Verfahren zum Gruppieren von Arbeiterknoten in einem maschinellen Lernsystem für föderiertes Lernen, wobei das maschinelle Lernsystem einen Master-Knoten und eine Vielzahl von Arbeiterknoten umfasst, wobei das Verfahren Folgendes umfasst:

Gruppieren jedes Arbeiterknotens aus der Vielzahl von Arbeiterknoten in eine Gruppe einer Vielzahl von Gruppen basierend auf Eigenschaften einer Datenverteilung jedes der Vielzahl von Arbeiterknoten, wobei die Arbeiterknoten der Gruppe Datenverteilungen mit ähnlichen Eigenschaften umfassen;

Untergruppieren von Arbeiterknoten innerhalb der Gruppe der Vielzahl von Gruppen in Untergruppen basierend auf Eigenschaften eines neuronalen Arbeiternetzwerkmodells jedes Arbeiterknotens aus der Gruppe der Vielzahl von Gruppen, wobei die Arbeiterknoten der Untergruppe neuronale Netzwerkmodelle mit ähnlichen Eigenschaften umfassen;

Mitteln der neuronalen Netzwerkmodelle der Arbeiterknoten innerhalb einer Untergruppe pro Schicht, um ein Untergruppen-Durchschnittsmodell zu erzeugen; und

Verteilen des Untergruppen-Durchschnittsmodells an einen oder mehrere der Arbeiterknoten in einer relevanten Untergruppe oder an einen anderen Ort.

2. Verfahren nach Anspruch 1, weiter umfassend, nach dem Gruppieren der Arbeiterknoten, zunächst eine Bestimmung, ob in einem lokalen Datensatz eines Arbeiterknotens aus der Vielzahl der Arbeiterknoten eine wesentliche Änderung vorliegt; wobei

wenn in keinem der lokalen Datensätze wesentliche Änderungen vorliegen, das Verfahren mit dem Untergruppieren fortfährt; oder

wenn in einem der lokalen Datensätze eine wesentliche Änderung vorliegt, das Gruppieren wiederholt wird.

3. Verfahren nach einem vorstehenden Anspruch, weiter umfassend, nach dem Untergruppieren der Arbeiterknoten, eine zweite Bestimmung, ob in lokalen Datensätzen der Vielzahl von Arbeiterknoten eine wesentliche Änderung vorliegt; wobei

wenn in keinem der lokalen Datensätze wesentliche Änderungen vorliegen, das Untergruppieren wiederholt wird; oder

wenn in einem der lokalen Datensätze eine wesentliche Änderung vorliegt, das Verfahren ab dem Gruppieren wiederholt wird.

4. Verfahren nach einem vorstehenden Anspruch, wobei das Verfahren weiter das Aktualisieren des neuronalen Arbeiternetzwerkmodells jedes Arbeiterknotens der Untergruppe mit dem Untergruppen-Durchschnittsmodell umfasst.

5. Verfahren nach einem vorstehenden Anspruch, wobei das Verfahren weiter nach dem Gruppieren das Mitteln des neuronalen Arbeiternetzwerkmodells jedes Arbeiterknotens einer Gruppe aus der Vielzahl von Gruppen umfasst, um ein Gruppen-Durchschnittsmodell zu erzeugen.

6. Verfahren nach Anspruch 5, weiter umfassend das Aktualisieren des neuronalen Arbeiternetzwerkmodells jedes Arbeiterknotens der Gruppe mit dem entsprechenden Gruppen-Durchschnittmodell.

7. Verfahren nach einem vorstehenden Anspruch, wobei das Gruppieren und/oder das Untergruppieren unter Verwendung eines Clustering-Algorithmus durchgeführt wird.

8. Verfahren nach einem vorstehenden Anspruch, wobei ein repräsentativer Datensatz zur Durchführung des Gruppierens verwendet wird.

9. Verfahren nach Anspruch 8, wobei beim Gruppieren ein Encoder-Modell unter Verwendung des repräsentativen Datensatzes trainiert wird und der repräsentative Datensatz unter Verwendung des Encoder-Modells codiert wird, um codierte Daten zu erzeugen.

10. Verfahren nach Anspruch 9, wobei beim Gruppieren ein Clustering-Algorithmus auf den kodierten Daten ausgeführt wird, um Cluster zu bestimmen, und für jeden Cluster ein Cluster-Repräsentant identifiziert wird, wobei jeder Cluster-Repräsentant einer Gruppe der Vielzahl von Gruppen entspricht.

11. Verfahren nach Anspruch 10, wobei das Verfahren beim Gruppieren weiter das Bestimmen der Gruppe umfasst, zu der ein Arbeiterknoten gehört, indem der lokale Datensatz eines Arbeiterknotens unter Verwendung des Encoder-Modells codiert wird und für jeden Cluster der Cluster-Repräsentant verwendet wird.

12. Verfahren nach einem vorstehenden Anspruch, wobei das Untergruppieren weiter Folgendes umfasst:

Berechnen der Inversen eines neuronalen Netzwerks für jeden der Arbeiterknoten, um ein rückwärtsgerichtetes neuronales Netzwerk zu erzeugen;
Erhalten einer Reihe von Antworten unter Verwendung des repräsentativen Datensatzes;
Einspeisen der Reihe von Antworten in das rückwärtsgerichtete neuronale Netzwerk, um eine Reihe von Repräsentationen zu erzeugen;
Einspeisen der Reihe von Repräsentationen in das neuronale Netzwerk, um eine Reihe vorhergesagter Antworten zu generieren;
Erhalten eines Verlustwertes zwischen der Reihe von Antworten und der Reihe von vorhergesagten Antworten; und
Anwenden eines Clustering-Algorithmus auf die Verlustwerte, um die Arbeiterknoten in Untergruppen zu gruppieren.

13. Master-Knoten, der für die Kommunikation mit einer Vielzahl von Arbeiterknoten in einem maschinellen Lernsystem für föderiertes Lernen konfiguriert ist, wobei der Master-Knoten Folgendes umfasst:

ein Gruppierungsmodul, das so konfiguriert ist, dass es jeden Arbeiterknoten der Vielzahl von Arbeiterknoten basierend auf Eigenschaften einer Datenverteilung jedes der Vielzahl von Arbeiterknoten in eine Gruppe einer Vielzahl von Gruppen gruppiert, wobei die Arbeiterknoten der Gruppe Datenverteilungen mit ähnlichen Eigenschaften umfassen;
ein Untergruppierungsmodul, das so konfiguriert ist, dass es Arbeiterknoten innerhalb der Gruppe der Vielzahl von Gruppen basierend auf Eigenschaften eines neuronalen Netzwerkmodells jedes Arbeiterknotens aus der Gruppe der Vielzahl von Gruppen in Untergruppen gruppiert, wobei die Arbeiterknoten der Untergruppe neuronale Netzwerkmodelle mit ähnlichen Eigenschaften umfassen;
ein Mittelwertbildungsmodul, das so konfiguriert ist, dass es pro Schicht die neuronalen Netzwerkmodelle der Arbeiterknoten innerhalb einer Untergruppe mittelt, um ein Untergruppen-Durchschnittsmodell zu erzeugen; und
ein Verteilungsmodul, das so konfiguriert ist, dass es das Untergruppen-Durchschnittsmodell an einen oder mehrere der Arbeiterknoten in einer relevanten Untergruppe oder an einen anderen Ort verteilt.

14. Maschinelles Lernsystem für föderiertes Lernen, das einen Master-Knoten und eine Vielzahl von Arbeiterknoten umfasst, wobei das System Folgendes umfasst:

ein Gruppierungsmodul, das so konfiguriert ist, dass es jeden Arbeiterknoten der Vielzahl von Arbeiterknoten basierend auf Eigenschaften einer Datenverteilung jedes der Vielzahl von Arbeiterknoten in eine Gruppe einer Vielzahl von Gruppen gruppiert, wobei die Arbeiterknoten der Gruppe Datenverteilungen mit ähnlichen Eigenschaften umfassen;
ein Untergruppierungsmodul, das so konfiguriert ist, dass es Arbeiterknoten innerhalb der Gruppe der Vielzahl von Gruppen basierend auf Eigenschaften eines neuronalen Netzwerkmodells jedes Arbeiterknotens aus der Gruppe unter der Vielzahl von Gruppen in Untergruppen unterteilt, wobei die Arbeiterknoten der Untergruppe neuronale Netzwerkmodelle mit ähnlichen Eigenschaften umfassen;
ein Mittelwertbildungsmodul, das so konfiguriert ist, dass es pro Schicht die neuronalen Netzwerkmodelle der Arbeiterknoten innerhalb einer Untergruppe mittelt, um ein Untergruppen-Durchschnittsmodell zu erzeugen; und
ein Verteilungsmodul, das so konfiguriert ist, dass es das Untergruppen-Durchschnittsmodell an einen oder mehrere der Arbeiterknoten in einer relevanten Untergruppe oder an einen anderen Ort verteilt.

**Revendications**

1. Procédé de regroupement de nœuds de travail dans un système d'apprentissage automatique pour l'apprentissage fédéré, le système d'apprentissage automatique comprenant un nœud maître et une pluralité de nœuds de travail, le procédé comprenant :

le regroupement de chaque nœud de travail parmi la pluralité de nœuds de travail dans un groupe parmi une pluralité de groupes sur la base de caractéristiques d'une distribution de données de chacun parmi la pluralité de nœuds de travail, dans lequel les nœuds de travail du groupe comprennent des distributions de données avec des caractéristiques similaires ;

la formation de sous-groupes de nœuds de travail à l'intérieur du groupe parmi la pluralité de groupes en sous-groupes sur la base de caractéristiques d'un modèle de réseau neuronal de travail de chaque nœud de travail du groupe parmi la pluralité de groupes, dans lequel les nœuds de travail du sous-groupe comprennent des modèles de réseaux neuronaux avec des caractéristiques similaires ;

le calcul de la moyenne, par couche, des modèles de réseaux neuronaux de nœuds de travail à l'intérieur d'un sous-groupe afin de générer un modèle moyen de sous-groupe ; et

la distribution du modèle moyen de sous-groupe à un ou plusieurs nœuds de travail dans un sous-groupe pertinent ou à un autre emplacement.

2. Procédé selon la revendication 1 comprenant en outre, après le regroupement des nœuds de travail, la première détermination de l'existence d'un changement important dans un ensemble de données local d'un nœud de travail parmi la pluralité de nœuds de travail ; dans lequel

s'il n'existe aucun changement important dans l'un quelconque des ensembles de données locaux, le procédé procède à la formation de sous-groupes ; ou

s'il existe un changement important dans l'un quelconque des ensembles de données locaux, le regroupement est répété.

3. Procédé selon une quelconque revendication précédente comprenant en outre, après la formation de sous-groupes des nœuds de travail, la seconde détermination de l'existence d'un changement important dans l'un quelconque des ensembles de données locaux parmi la pluralité de nœuds de travail ; dans lequel

s'il n'existe aucun changement important dans l'un quelconque des ensembles de données locaux, la formation de sous-groupes est répétée ; ou

s'il existe un changement important dans l'un quelconque des ensembles de données locaux, le procédé est répété à partir du regroupement.

4. Procédé selon une quelconque revendication précédente, le procédé comprenant en outre la mise à jour du modèle de réseau neuronal de travail de chaque nœud de travail du sous-groupe avec le modèle moyen de sous-groupe.

5. Procédé selon une quelconque revendication précédente, le procédé comprenant en outre, après le regroupement, le calcul de la moyenne du modèle de réseau neuronal de travail de chaque nœud de travail d'un groupe parmi la pluralité de groupes pour générer un modèle moyen de groupe.

6. Procédé selon la revendication 5, comprenant en outre la mise à jour du modèle de réseau neuronal de travail de chaque nœud de travail du groupe avec le modèle moyen de groupe correspondant.

7. Procédé selon une quelconque revendication précédente, dans lequel le regroupement et/ou la formation de sous-groupes est(sont) effectué(e)(s) à l'aide d'un algorithme de groupement.

8. Procédé selon une quelconque revendication précédente, dans lequel un ensemble de données représentatif est utilisé pour effectuer le regroupement.

9. Procédé selon la revendication 8, dans lequel, lors du regroupement, un modèle de codeur est entraîné à l'aide de l'ensemble de données représentatif, et l'ensemble de données représentatif est codé à l'aide du modèle de codeur pour générer des données codées.

10. Procédé selon la revendication 9, dans lequel, lors du regroupement, un algorithme de groupement est exécuté sur les données codées pour déterminer les groupes, et un représentant de groupe est identifié pour chaque groupe, dans lequel chaque représentant de groupe correspondant à un groupe parmi la pluralité de groupes.

11. Procédé selon la revendication 10, dans lequel, lors du regroupement, le procédé comprend en outre la détermination du groupe auquel appartient un nœud de travail en codant l'ensemble de données local d'un nœud de travail à l'aide du modèle de codeur et en utilisant le représentant de groupe pour chaque groupe.

12. Procédé selon une quelconque revendication précédente, dans lequel la formation de sous-groupes comprend en outre :

le calcul de l'inverse d'un réseau neuronal de chacun des nœuds de travail pour générer un réseau neuronal inverse ;

l'obtention d'un ensemble de réponses à l'aide de l'ensemble de données représentatif ;

l'alimentation du réseau neuronal inverse avec l'ensemble des réponses afin de générer un ensemble de représentations ;

l'alimentation du réseau neuronal avec l'ensemble des représentations afin de générer un ensemble de réponses prédites ;

la détermination d'une valeur de perte entre l'ensemble des réponses et l'ensemble de réponses prédites ; et l'exécution d'un algorithme de groupement sur les valeurs de perte pour regrouper les nœuds de travail en sous-groupes.

13. Nœud maître configuré pour communiquer avec une pluralité de nœuds de travail dans un système d'apprentissage automatique pour l'apprentissage fédéré, le nœud maître comprenant :

un module de regroupement configuré pour regrouper chaque nœud de travail parmi la pluralité de nœuds de travail dans un groupe parmi une pluralité de groupes sur la base de caractéristiques d'une distribution de données de chacun parmi la pluralité de nœuds de travail, dans lequel les nœuds de travail du groupe comprennent des distributions de données avec des caractéristiques similaires ;

un module de formation de sous-groupes configuré pour regrouper les nœuds de travail à l'intérieur du groupe parmi la pluralité de groupes en sous-groupes sur la base de caractéristiques d'un modèle de réseau neuronal de travail de chaque nœud de travail du groupe parmi la pluralité de groupes, dans lequel les nœuds de travail du sous-groupe comprennent des modèles de réseaux neuronaux avec des caractéristiques similaires ;

un module de calcul de la moyenne configuré pour calculer la moyenne, par couche, des modèles de réseaux neuronaux de nœuds de travail à l'intérieur d'un sous-groupe afin de générer un modèle moyen de sous-groupe ; et

un module de distribution configuré pour distribuer le modèle moyen de sous-groupe à un ou plusieurs des nœuds de travail dans un sous-groupe pertinent ou à un autre emplacement.

14. Système d'apprentissage automatique, pour l'apprentissage fédéré, comprenant un nœud maître et une pluralité de nœuds de travail, le système comprenant :

un module de regroupement configuré pour regrouper chaque nœud de travail parmi la pluralité de nœuds de travail dans un groupe parmi la pluralité de groupes sur la base de caractéristiques d'une distribution de données de chacun parmi la pluralité de nœuds de travail, dans lequel les nœuds de travail du groupe comprennent des distributions de données avec des caractéristiques similaires ;

un module de formation de sous-groupes configuré pour former des sous-groupes de nœuds de travail à l'intérieur du groupe parmi la pluralité de groupes en sous-groupes sur la base de caractéristiques d'un modèle de réseau neuronal de travail de chaque nœud de travail du groupe parmi la pluralité de groupes, dans lequel les nœuds de travail du sous-groupe comprennent des modèles de réseaux neuronaux avec des caractéristiques similaires ;

un module de calcul de la moyenne configuré pour calculer la moyenne, par couche, des modèles de réseaux neuronaux de nœuds de travail à l'intérieur d'un sous-groupe afin de générer un modèle moyen de sous-groupe ; et

un module de distribution configuré pour distribuer le modèle moyen de sous-groupe à un ou plusieurs des nœuds de travail dans un sous-groupe pertinent ou à un autre emplacement.

**1**

**4**

**2a**

**2b**

**2c**

**2d**

**2e**

**Fig. 1**

EP 4 165 559 B1

| | Grouping each worker node into a group of a plurality of groups based on characteristics of a data distribution of each of the plurality of worker nodes |
|---|---|
| S100 | |

$\downarrow$

| | Subgrouping worker nodes within the group of the plurality of groups into subgroups based on characteristics of a worker neural network model of each worker node from the group of the plurality of groups |
|---|---|
| S102 | |

$\downarrow$

| | Averaging the neural network models of worker nodes within a subgroup to generate a subgroup average model |
|---|---|
| S104 | |

$\downarrow$

| | Distributing subgroup average model |
|---|---|
| S106 | |

Fig. 2

S100

Grouping

S101

Change in local dataset of a worker?

YES

YES

NO

S104, S106

Averaging
and
distributing

S102 — Subgrouping

S103

Change in local dataset of a worker?

NO

Fig. 3

Fig. 4

Fig. 5A

Fig. 5B

EP 4 165 559 B1

Fig. 6

# EP 4 165 559 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MCMAHAN, H B et al.** Communication-efficient learning of deep networks from decentralized data. *Proceedings of the 20th International Conference on Artificial Intelligence and Statistics (AISTATS)*, 2017, https://arxiv.org/pdf/1602.05629

- **HUANG, L** ; **LIU, D**. *Patient Clustering Improves Efficiency of Federated Machine Learning to predict mortality and hospital stay time using distributed Electronic Medical Records*, 2019, https://arxiv.org/ftp/arxiv/papers/1903/1903.09296.pdf
- **SATTLER, F et al.** *Clustered Federated Learning: Model-Agnostic Distributed Multi-Task Optimization under Privacy Constraints*, 2019, https://arxiv.org/pdf/1910.01991.pdf